Europäisches Patentamt

(19) European Patent Office

Office européen des brevets

(11) Publication number: **0 267 242 B1**

(12) **EUROPEAN PATENT SPECIFICATION**

(45) Date of publication of patent specification:
10.04.91 Bulletin 91/15

(51) Int. Cl.⁵: **H01M 2/04, H01M 2/22**

(21) Application number: **87903204.3**

(22) Date of filing: **12.05.87**

(86) International application number:
**PCT/US87/01070**

(87) International publication number:
**WO 87/07434 03.12.87 Gazette 87/27**

(54) **METHOD OF MAKING A BATTERY.**

(30) Priority: **19.05.86 US 864386**

(43) Date of publication of application:
**18.05.88 Bulletin 88/20**

(45) Publication of the grant of the patent:
**10.04.91 Bulletin 91/15**

(84) Designated Contracting States:
**DE FR GB IT NL**

(56) References cited:
**EP-A- 0 081 339
CH-A- 204 348
DE-A- 2 456 943
DE-A- 3 112 512
FR-A- 2 196 526
FR-A- 2 373 888
US-A- 3 970 279**

(73) Proprietor: **EASTMAN KODAK COMPANY (a New Jersey corporation)**
**343 State Street**
**Rochester New York 14650 (US)**

(72) Inventor: **CLARK, Peter, Stuyvesant**
**90 Camberly Place**
**Penfield, NY 14526 (US)**
Inventor: **CATALDI, Richard, Thomas**
**33 Dunning Avenue**
**Webster, NY 14580 (US)**

(74) Representative: **Phillips, Margaret Dawn et al**
**Kodak Limited Patent Department Headstone Drive**
**Harrow, Middlesex HA1 4TY (GB)**

EP 0 267 242 B1

## Description

The present invention relates to a method of making a battery, and more particularly, to a method of forming a hermetically-sealed battery from a plastic material.

In the production of relatively small batteries for use in portable items, such as cameras, it is necessary to make the batteries with as few steps as possible to minimize cost. However, the batteries must be made by methods that will insure that the battery will be leakproof over the life of the battery. Such batteries normally include a plurality of cells, and one of the main problems is in making leakproof electrical connections between cells and between the cells and the battery terminals. One known method of making batteries is to form individual sealed cells and to electrically connect the individual cells. Such a method is time consuming and is too expensive for most types of batteries.

U.S. Patent No. 4,121,017, discloses a battery in which separate cell compartments are formed in a molded plastic container. Folded plates are placed in the compartments, and a container cover is sealed over the compartments. The positive and negative plates of adjacent cells are electrically connected through a common wall, and the battery terminals are joined to the cells through connections in special channels at opposite sides of the battery. A problem with this method of construction is that a complex welding procedure must be used to make the intercell connections and the connections between the cells and the battery terminals. Further, since the intercell connections are made through the cell wall, it is very difficult to make the connections leakproof over the life of the battery.

British Patent Specification No. 510,238, discloses an electric storage battery in which pole connections are embedded in a cell cover, and the pole connections have extensions which are welded to lugs of positive and negative plates in the battery cells. Grooves are formed in the lower face of the cover and are filled in with a mass which serves for sealing the walls of the cells against the cell cover. Fill holes are provided in a top wall for adding fluid to the battery. Such a construction is not suitable for use in forming hermetically-sealed batteries, such as lithium batteries, which must remain permanently sealed over long periods of use.

French Patent Specification No. 2196526 discloses a battery which comprises a plurality of cell cavities connected in series by inserts molded into the battery cover. The battery cover is attached to the battery casing using thermal welding techniques.

In French Patent Specification No. 2373888, a battery similar to that described above, is disclosed in which the battery cover is attached using ultrasonic welding techniques.

It is an object of the present invention to overcome the problems in the prior art discussed above and to provide a method of manufacturing a battery which is relatively inexpensive and produces a hermetically-sealed battery.

In accordance with one aspect of the invention, there is provided a method of making a battery comprising the steps of :

forming a container having a plurality of cavities therein,

injecting heated plastic into a mold having electrically-conductive inserts therein to form a battery cover ;

inserting electrodes into each of the cavities to form a plurality of cells, the electrodes being arranged in the cavities such that terminals thereof are located adjacent an opening of each of the cavities,

joining the terminals of each cell to the conductive inserts to form electrical connections between the cells and between battery terminals on the battery cover ; and

ultrasonically welding the battery cover to the container,

characterized in that the electrically-conductive inserts are heated to a temperature of about 204°C when the heated plastic is injected into the mold.

In accordance with a further aspect of the invention, there is provided a method of making a cover from a plastic for use in a battery, the method comprising the steps of : placing electrically conductive inserts in grooves in a mold such that first portions of said inserts are exposed and second portions are contained in said grooves ; heating the inserts to a temperature sufficient to activate chemical bonding between said inserts and the plastic ; and injecting heated plastic into the mold to form a cover in which the first portions of the inserts are embedded in the plastic and bonded thereto and said second portions are exposed.

In one embodiment of the invention, a battery is formed by first molding a plastic container having a plurality of cell cavities therein. Folded electrodes are inserted in the cell cavities such that the electrode terminals extend from each cavity. A battery cover is formed with a plurality of conductive inserts molded therein. The inserts are joined to electrode terminals of the individual cells to form the connections between cells and the connections for the battery terminals. The battery cover is joined to the container by ultrasonic means to hermetically seal the cells.

Certain types of batteries, for example, lithium-$MnO_2$ batteries, are designed to have a shelf life of several years. It is especially important in these types of batteries that the battery be hermetically sealed, not only to prevent leakage of electrolyte, but also to maintain battery strength during long periods of storage. A principal advantage of the present invention is that a hermetically sealed battery can be produced in relatively few steps. As a result of molding the electrically-conductive inserts in the container cover, the internal electrical connections in the battery can be made in a single step, and all of the cells can be sealed by affixing the container cover to the container. Further, since the electrical connections are contained in the individual elements of the battery, the disclosed method is particularly suitable for use in high-speed, automated assembly equipment. Applicants' method can be practiced in making batteries having a single cell as well as multicell batteries.

Embodiments of the present invention will now be described, by way of example, with reference to the accompanying drawings in which :

Fig. 1 is an exploded perspective view of a battery made by the present invention,

Fig. 2 is an elevational view, in section, of a single cell of the battery ;

Fig. 3 is a sectional view taken along the line 3-3 in Fig. 2 ;

Fig. 4 is a top plan view of the container, showing the arrangement of the electrodes in each cell cavity ;

Fig. 5 is a bottom plan view of the container cover;

Fig. 6 is a sectional view taken along the line 6-6 in Fig. 5 ;

Fig. 7 is a sectional view taken along the line 7-7 in Fig. 5 ;

Fig. 8 is a plan view of a mold cavity for forming the covers, and

Fig. 9 is a sectional view taken along the line 9-9 in Fig. 8.

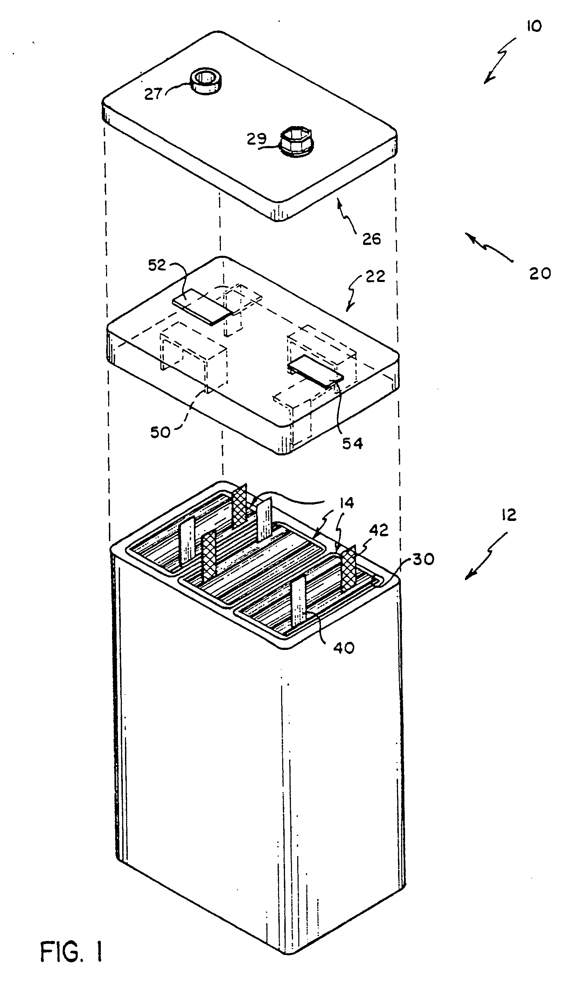

The method of the present invention is described hereinafter with reference to a lithiummanganese dioxide battery. It will be apparent, however, that the present invention can be used in making other types of batteries. With reference to Fig. 1, there is shown a battery 10 constructed in accordance with the method of the present invention. Battery 10 comprises a container 12 which includes three cells 14. A battery cover 20 comprises a container cover 22 and a terminal plate 26 having a positive terminal 27 and a negative terminal 29.

Container 12 is formed, for example, by conventional injection molding techniques from a material such as polypropylene having a reinforcing filler. One suitable material is polypropylene having a reinforcing filler of about 20% chopped glass. Container 12 is formed with three cavities 30. As shown in Figs. 1-4, each of the cell cavities 30 contains an electrode assembly 34 which includes an anode 36, a cathode 38, and a separator (not shown).

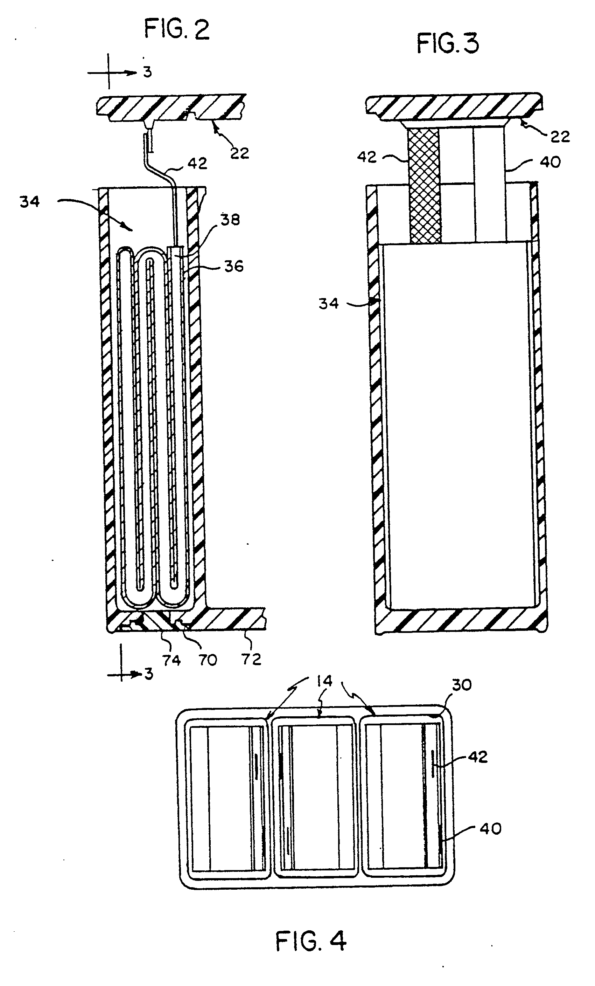

Anode 36 can be formed as a laminate structure (not shown) having two or three layers in which lithium is coated on a 25.4 μm (1 mil) stainless steel foil collector. A portion of the stainless steel foil is left uncoated to form an anode terminal 40. A porous, electrically-insulating material, such as Celgard ™ 4510, is rolled over the lithium to form a separator. Cathode 38 is also a laminate structure (not shown) and comprises a stainless steel grid collector coated on one or both sides with a mixture of $MnO_2$, carbon and Teflon ™ 23. A small portion of the collector is left uncoated to function as a cathode terminal 42. Electrode assembly 34 is formed by positioning cathode 38 on top of an anode 36 such that they are not in electrical contact, and folding the assembly into a form suitable for insertion into a cavity 30. One example of a suitable form is the accordian-folded assembly 34 shown in Fig. 2. A more complete description of the electrode assembly 34 is provided in European Patent Application No. 86303664.6. As will be apparent from the discussion that follows, each of the cells 14 is hermetically sealed. Thus, it is preferred to incorporate a thermal fuse (not shown) in electrode assembly 34 to insure against the rupture of container 12 in the event of a short circuit or other malfunction.

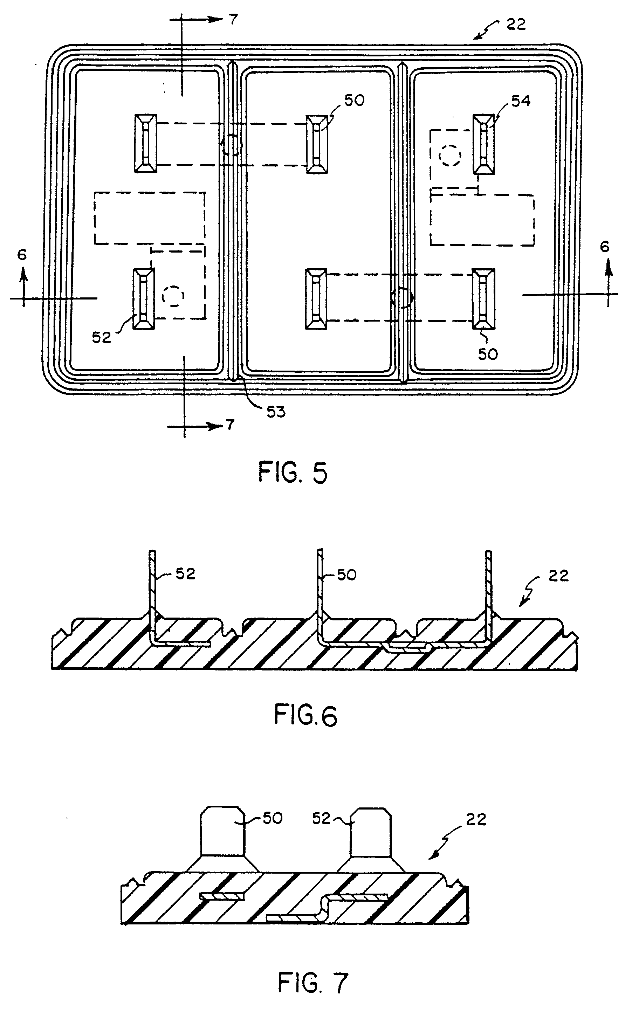

As shown in Fig. 1 and 5-7, container cover 22 comprises two U-shaped inserts 50 which are used to form the electrical connections between adjacent cells 14. Cover 22 also contains inserts 52 and 54 which are used to connect a cathode terminal 42 and an anode terminal 40 respectively and which also serve to form the electrical connections with terminal plate 26. It will be seen that inserts 52 and 54 extend through the entire thickness of cover 22, and thus, the material of cover 22 must be securely bonded to the inserts 50, 52, to provide a leakproof cover. As shown in Figs. 5-7, ridges 53 are formed on a bottom side of cover 22 ; ridges 53 serve as energy concentrators in a step, described later, in which cover 22 is ultrasonically welded to container 12. The ridges 53 are formed to have an included angle of approximately 90° which has been found to maximize flow in the weld process without giving excess flash.

An important element of the present invention is the method of forming container cover 22 with inserts 50, 52 and 54 molded therein to obtain a fluid-tight cover which can be used to form the electrical connections between the cells 14 and between cells 14 and the battery terminals 27 and 29.

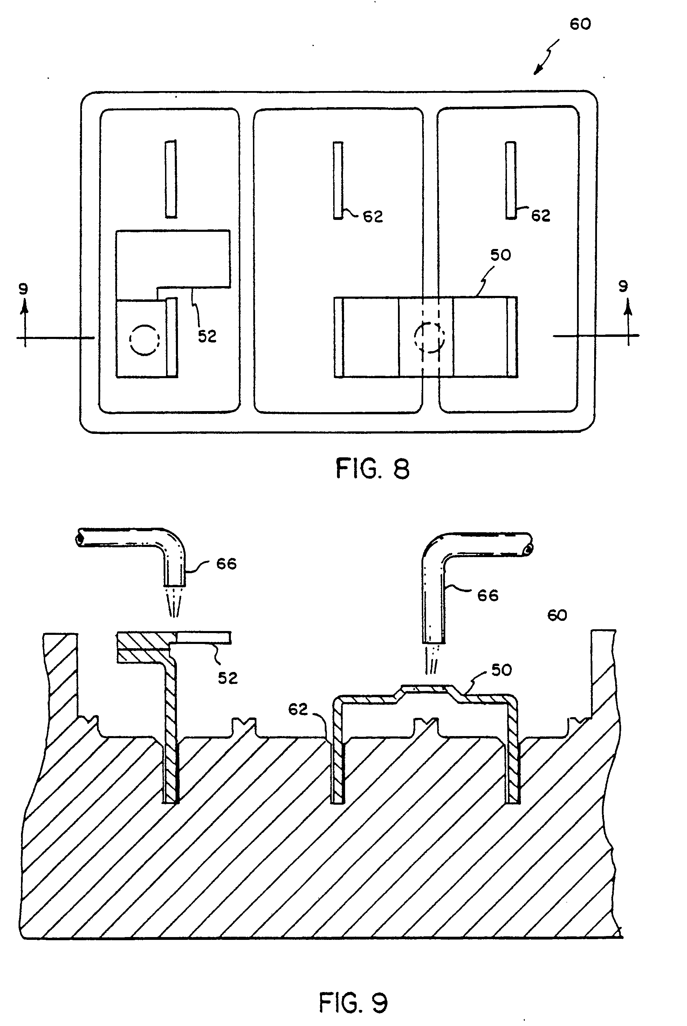

Container cover 22 is shown in detail in Figs. 5-7, and a mold 60 for forming cover 22 is shown in Figs. 8 and 9. Mold 60 forms a part of a conventional screw type injection molding machine (not shown) which comprises a horizontal rotary table (not shown) to facilitate the loading of inserts 50, 52 and 54 into mold 60. In forming cover 22, inserts 50, 52 and 54 are placed in slots 62 in mold 60 with portions contained in the slots 62 which will extend from the completed cover 22. For clarity, only inserts 50 and 52 are shown in Figs. 8 and 9, it being understood that another insert 50 and another insert 54 would be placed in the mold 60 in the actual molding of a cover 22. It is essential that the metal inserts 50, 52 and 54 be heated to a temperature sufficient to activate chemical bonding between the plastic material and inserts 50, 52 and 54. The inserts 50, 52 and 54 are heated in mold 60 by gas jets 66 to a temperature of at least 200°C (400°F). Jets 66 can be fueled by butane, but preferably the jets 66 are fueled by hydrogen. After the heating of inserts 50, 52 and 54, jets 66 are moved away, and a mold cover (not shown) is moved into place. Plastic material, at a pressure of between 70MPa (10,000 psi) and 140MPa (20,000 psi) and a temperature between about 190°C (375°F) and about 245°C (475°F), is injected into the mold 60 to form cover 22. After a curing time of about five seconds, cover 22 is removed from the mold. The entire molding operation can be completed in about 20 seconds, including the curing time.

It is important that a strong bond be formed between the inserts 50, 52 and 54, and the plastic material of cover 22. It has been found that an excellent bond is obtained by using chemically modified polyolefins as the plastic material. A preferred plastic material for forming cover 22 is Polybond ™ 1016 chemically modified polyolefin which is a thermoplastic propylene-ethylene elastomer-acrylic acid terpolymer and is sold by B. P. Performance Polymers Inc., Hackettstown, N.J. ; also suitable is Polybond ™ 1001 chemically modified polyolefin. A preferred material for inserts 50, 52 and 54, is stainless steel, preferably type 304. Cover 22 can also be formed from Plexar ™ 2511 chemically modified polyolefin, sold by Norchem Co. Inserts 50, 52 and 54 can also be made from aluminum and from copper.

Terminal plate 26 is formed by injection molding from a material such as polypropylene. Battery terminals 27 and 29 extend through plate 26 and are fixed thereto by, for example, riveting.

In the assembly of battery 10, cover 22 is positioned over container 12 and the anode terminal 40 and the cathode terminal 42 in each cell are joined to the appropriate insert 50, 52 and 54, by spot welding. In the lithium-$MnO_2$ battery described herein, each of the cells 14 produces 3V, and the cells 14 are connected in series to form a 9V battery. When the electrical connections have been made, cover 22 is ultrasonically welded to container 12. Electrolyte is then added into each of the cells 14 through openings 70 (Fig. 2) in a bottom wall 72 of container 12. Openings 70 are closed by plastic plugs 74 which are ultrasonically welded to wall 72.

Preferred electrolytes for battery 12 are electrolytes comprising, for example, a solvent mixture of a propylene carbonate and dimethoxyethane used with a lithium salt such as lithium tetrafluoroborate, or a solvent mixture of butyrolactone and dimethoxyethane used with a lithium salt such as lithium tetrafluoroborate ($LiBF_4$) or lithium trifluoromethanesulfonate ($LiCF_3SO_3$). One suitable electrolyte would be an electrolyte containing 1M $LiBF_4$ in a solvent mixture of 4-butyrolactone and dimethoxyethane. Another suitable electrolyte would contain 1M $LiCF_3SO_3$ in a solvent mixture of 4-butyrolactone and dimethoxyethane.

After the electrolyte has been added to each of the cells 14, terminal plate 26 is electrically connected to cover 22 by welding leads (not shown) from terminals 27 and 29 to inserts 52 and 54 respectively. In a final step, terminal plate 26 is ultrasonically welded to cover 22.

## Claims

1. A method of making a battery comprising the steps of :

forming a container having a plurality of cavities therein ;

injecting heated plastic into a mold having electrically-conductive inserts therein to form a battery cover ;

inserting electrodes into each of the cavities to form a plurality of cells, the electrodes being arranged in the cavities such that terminals thereof are located adjacent an opening of each of the cavities ;

joining the terminals of each cell to the conductive inserts to form electrical connections between the cells and between battery terminals on the battery cover ; and

ultrasonically welding the battery cover to the container,

characterized in that the electrically-conductive inserts are heated to a temperature of about 204°C when the heated plastic is injected into the mold.

2. A method according to claim 1, wherein the electrically-conductive inserts are heated using a gas flame.

3. A method according to claim 1 or 2, wherein the plastic is at a temperature between about 190°C and about 245°C when it is injected into the mold.

4. A method according to any one of claims 1 to 3, wherein the battery cover comprises a container cover having the electrically-conductive inserts therein and a terminal plate having a pair of terminals, and the method further includes the step of connecting the electrically-conductive inserts to the terminals.

5. A method according to claim 4, further including the step of ultrasonically welding the terminal plate to the container cover.

6. A method according to claim 4 or 5, wherein the container cover is formed from a chemically modified polyolefin.

7. A method according to claim 6, wherein the container cover is formed from Polybond ™ 1016 chemically modified polyolefin.

8. A method according to any one of the preceding claims, wherein the inserts are stainless steel.

9. A method according to any one of the preceding claims, further including the steps of adding an electrolyte through an opening in a bottom wall of the container, closing the opening with a plug, and ultrasonically welding the plug to the bottom wall to seal the opening.

10. A method according to any one of the preceding claims, wherein the container is formed from a polypropylene having a reinforcing filler therein.

**Ansprüche**

1. Verfahren zur Herstellung einer Batterie, bei dem in mehreren Arbeitsschritten
ein Behälter mit mehreren Hohlräumen hergestellt wird,
zur Herstellung eines Batteriedeckels erwärmter Kunststoff in eine Form gegossen wird, die elektrisch leitfähige Einsätze besitzt,
zur Herstellung mehrerer Zellen in jeden der Hohlräume Elektroden eingesetzt und dort so angeordnet werden, daß die Elektrodenanschlüsse sich neben der Öffnung eines jeden Hohlraums befinden,
die Anschlüsse jeder Zelle an die leitfähigen Einsätze angeschlossen werden und so zwischen den einzelnen Zellen sowie zwischen den Batterieanschlüssen auf dem Batteriedeckel eine elektrische Verbindung entsteht, und
der Batteriedeckel mit Ultraschall mit dem Behälter verschweißt wird, **dadurch gekennzeichnet,** daß die elektrisch leitfähigen Einsätze auf etwa 204°C erhitzt werden, wenn der erhitzte Kunststoff in die Form gegossen wird.

2. Verfahren nach Anspruch 1, dadurch gekennzeichnet, daß die elektrisch leitfähigen Einsätze mit einer Gasflamme erhitzt werden.

3. Verfahren nach Anspruch 1 oder 2, dadurch gekennzeichnet, daß der Kunststoff beim Einspritzen in die Form eine Temperatur zwischen ca. 190°C und ca. 245°C hat.

4. Verfahren nach einem der Ansprüche 1 bis 3, dadurch gekennzeichnet, daß der Batteriedeckel einen Behälterdeckel mit den elektrisch leitfähigen Einsätzen umfaßt und eine Anschlußplatte zwei Anschlüsse besitzt, und daß die elektrisch leitfähigen Einsätze mit den Anschlüssen verbunden werden.

5. Verfahren nach Anspruch 4, dadurch gekennzeichnet, daß die Anschlußplatte mit dem Behälterdeckel mit Ultraschall verschweißt wird.

6. Verfahren nach Anspruch 4 oder 5, dadurch gekennzeichnet, daß der Behälterdeckel aus einem chemisch modifizierten Polyolefin besteht.

7. Verfahren nach Anspruch 6, dadurch gekennzeichnet, daß der Behälterdeckel aus dem chemisch modifizierten Polyolefin Polybond 1016 besteht.

8. Verfahren nach einem der vorhergehenden Ansprüche, dadurch gekennzeichnet, daß die Einsätze aus Edelstahl bestehen.

9. Verfahren nach einem der vorhergehenden Ansprüche, dadurch gekennzeichnet, daß in weiteren Arbeitsschritten ein Elektrolyt durch eine Öffnung in einem Boden des Behälters eingefüllt, die Öffnung mit einem Stöpsel verschlossen und der Stöpsel mit dem Boden des Behälters ultraschallverschweißt wird, um die Öffnung abzudichten.

10. Verfahren nach einem der vorhergehenden Ansprüche, dadurch gekennzeichnet, daß der Behälter aus einem Polypropylen mit einer verstärkenden Füllmasse besteht.

**Revendications**

1. Procédé pour fabriquer une pile comprenant les étapes suivantes :
– former un conteneur ayant une pluralité de cavités ;
– injecter du plastique fondu dans un moule comprenant des broches, conductrices électriquement afin de former un couvercle de la pile ;
– insérer des électrodes dans chacune des cavités pour former une pluralité d'éléments, les électrodes étant disposées dans les cavités de telle sorte que des bornes soient positionnées à côté d'une ouverture de chacune des cavités ;
– joindre les bornes de chaque cellule aux broches conductrices afin de former des connexions électriques entre les éléments et entre les bornes de la pile sur le couvercle de la pile ; et
– souder par ultra-sons le couvercle de la pile au conteneur
– ledit procédé étant caractérisé en ce que les broches conductrices sont chauffées à une température d'environ 204°C lorsque le plastique fondu est injecté dans le moule.

2. Procédé selon la revendication 1, dans lequel les broches conductrices sont chauffées en utilisant une flamme de gaz.

3. Procédé selon la revendication 1 ou 2, dans lequel le plastique est à une température comprise environ entre 190°C et 245°C lorsqu'il est injecté dans le moule.

4. Procédé selon l'une quelconque des revendications 1 à 3 dans lequel le couvercle de la pile comprend un couvercle du conteneur pourvu des broches conductrices et une plaque comprenant une paire de bornes, le procédé comprenant en plus une étape dans laquelle on connecte les broches conductrices aux bornes.

5. Procédé selon la revendication 4, comprenant en plus une étape dans laquelle on soude par ultra-sons ladite plaque au couvercle du conteneur.

6. Procédé selon la revendication 4 ou 5 dans lequel le couvercle du conteneur est formé à partir d'une polyolefin modifiée chimiquement.

7. Procédé selon la revendication 6 dans lequel le couvercle du conteneur est formé à partir d'une polyolefin modifiée chimiquement avec du Polybond® 1016.

8. Procédé selon l'une quelconque des revendications précédentes, dans lequel les broches sont en acier inoxydable.

9. Procédé selon l'une quelconque des revendications précédentes dans lequel on ajoute un électrolyte par une ouverture ménagée dans le fond du conteneur, on ferme l'ouverture avec un bouchon, et on soude par ultra-sons le bouchon au fond du conteneur afin d'étanchéifier ladite ouverture.

10. Procédé selon l'une quelconque des revendications, précédentes dans lequel le conteneur est formé à partir d'un polypropylène ayant un agent de charge renforçateur.

FIG. 1

FIG. 2

FIG.3

FIG. 4

8

FIG. 5

FIG.6

FIG. 7

FIG. 8

FIG. 9